# EUROPEAN PATENT APPLICATION

(11) **EP 2 290 257 A1**
(43) Date of publication of application: **02.03.2011**
(21) Application number: 09178522.0
(22) Date of filing: 09.12.2009
(51) Int. Cl.: F16D 69/04, F16D 65/092

(54) **Friction pad for brake system**

(30) Priority: 01.09.2009 KR 20090082170
(71) Applicant: Dawin Friction, Incheon (KR)
(72) Inventor: Na, Jong Tae, Seoul (KR); Kim, Sang Ho, Incheon (KR); Lee, Beom Joo, Incheon (KR)
(74) Representative: Postiglione, Ferruccio

(57) **Abstract**

A friction pad (100) for a brake system, including a plurality of friction materials (130), a support plate (120) supporting the friction materials, a back plate (110) connected to a bottom surface of the support plate, a support spring (140) supporting the friction materials, a dovetail (150) fixing the friction pad to the brake system, and a stopper (136).

## Description

### Background of the Invention

### 1. Field of the Invention

An aspect of the present invention relates to a friction pad for a brake system.

### 2. Description of the Related Art

In general, a friction pad used in an aircraft or a rail vehicle having a large amount of kinetic energy includes a friction member with a predetermined shape and a back plate fixedly supporting the friction member. The friction member directly contacts a brake disc rotating in tandem with a rotating part for the aircraft or train car to generate friction that opposes the movement of the brake disc and the rotating part.

Unlike ordinary vehicles, aircraft or rail vehicle with large kinetic energy requires a friction pad that generates a large frictional force to decelerate a rotating part in the course of a braking process. In addition, the friction pad must have high wear resistance and durability. The friction member for use in the friction pad must be made of a material capable of enduring a temperature rise due to heat generated during friction without changing its characteristics while quickly dissipating the heat generated during friction.

A conventional brake system is problematic because it may wear away fast due to a phenomenon called "hot spot." To address this problem, a brake system configured with a plurality of friction members supported by elastic support springs with respect to a back plate has been proposed. The proposed brake system allows the plurality of friction members and brake discs corresponding thereto to be engaged to uniformly contact each other, regardless of a difference in the load applied to a surface of each friction member that is in contact with the brake disc, thereby preventing the hot spot from occurring.

In the conventional brake system having the aforementioned configuration, however, the support springs may degrade because heat generated during friction is directly transferred to the support springs. That is, in order to effectuate a braking process, the friction occurs between a brake disc and a brake pad and the frictional heat is generated by friction of a plurality of friction members. Here, the entire surface of the support spring may come into perfect contact with a support member that holds the plurality of friction members by a compressive load applied from the brake pad. In such a case, the support spring may encounter with degradation, like wear, etc.

Accordingly, when the support springs repeatedly encounter with degradation in the course of the braking process, the life spans of the support springs may be undesirably reduced, thus ultimately resulting in poor performance of the brake system.

### Brief Summary of the Invention

Aspects of the present invention provide a friction pad for a brake system which can improve performance of the brake system by preventing a support spring interposed between a support member and a back plate from degrading when a compressive load derived from a brake pad is applied thereto during friction between the brake pad and a brake disc.

According to an aspect of the present invention, there is provided a friction pad for a brake system including a plurality of friction materials, each including a friction member shaped of a column with a predetermined height and a support member bonded to a bottom surface of the friction member, a support plate shaped of a plate, supporting the friction material and including a planar portion, a protrusion protruding upward from the planar portion and having a coupling hole formed at the interior thereof, the coupling hole through which the friction material is inserted and having a diameter corresponding to an outer diameter of the friction material, a back plate having a planar shape mating to the support plate and connected to a bottom surface of the support plate, a support spring interposed between a bottom surface of the friction material and a top surface of the back plate and supporting the friction material, a dovetail bonded to a bottom surface of the back plate and fixing the friction pad to the brake system, and a stopper projecting a distance from a central region of at least one of the support member and the back plate.

The stopper may have a height greater than a thickness of the support spring and less than an original height of the support spring before it is compressed.

The support spring may be a leaf spring shaped of a truncated cone or a coil spring. In addition, the support spring may include at least one of a truncated cone shaped spring having a top-end outer diameter smaller than a bottom-end outer diameter and a truncated cone shaped spring having a top-end outer diameter greater than a bottom-end outer diameter.

In addition, the support spring may include a plurality of recessed grooves and a plurality of support protrusions, the plurality of recessed grooves each extending a predetermined length from a cavity formed on the top surface of the support spring and equally spaced along the outer circumference of the cavity, and the plurality of support protrusions disposed in the vicinity of the plurality of recessed grooves and elastically supporting the support member.

As described above, in the friction pad for a brake system according to the present invention, since a stopper is integrally formed with a support member at the interior area defined by support springs and projects a distance from a central region of a bottom surface of the support member, the support springs can be prevented from entirely contacting the support member by the action of the stopper, thereby suppressing degradation of the support springs.

In addition, even when the support springs wear, the stopper can substitute for the support springs.

Further, the friction pad according to the present invention can improve performance of the brake system by increasing the modulus of elasticity, which is allowed because the support springs are elastically deformed according to the load applied thereto.

### Brief Description of the Drawings

The objects, features and advantages of the present invention will be more apparent from the following detailed description in conjunction with the accompanying drawings, in which:
FIG. 1 is a plan view of a friction pad for use in a brake system according to a first embodiment of the present invention;
FIG. 2 is a vertical cross-section taken along line A-A' of FIG. 1;
FIG. 3 is an enlarged cross-section of a portion 'B' shown in FIG. 2;
FIG. 4 is a perspective view showing a state of the friction pad after and before a support spring is compressed;
FIG. 5 is a diagram illustrating the operation of the portion 'B' shown in FIG. 3;
FIG. 6 is a cross-sectional view of a friction pad for a brake system according to01 a second embodiment of the present invention;
FIG. 7 is a cross-sectional view of a friction pad for a brake system according to a third embodiment of the present invention.
FIG. 8 is a cross-sectional view of a friction pad for a brake system according to a fourth embodiment of the present invention; and
FIG. 9 illustrates another example of a support spring according to the present invention.

### Detailed Description of the Invention

Hereinafter, embodiments of the present invention will be described in detail with reference to the accompanying drawings.

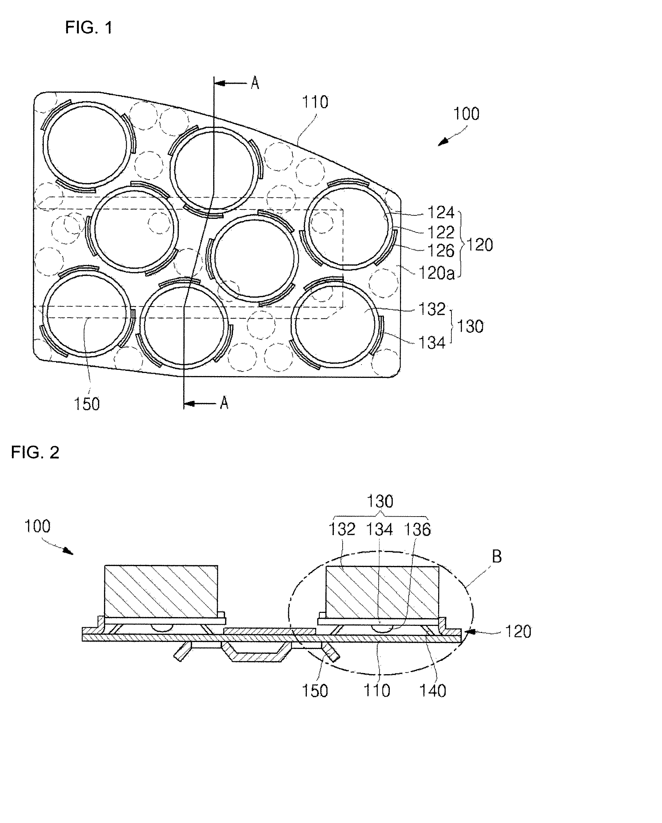

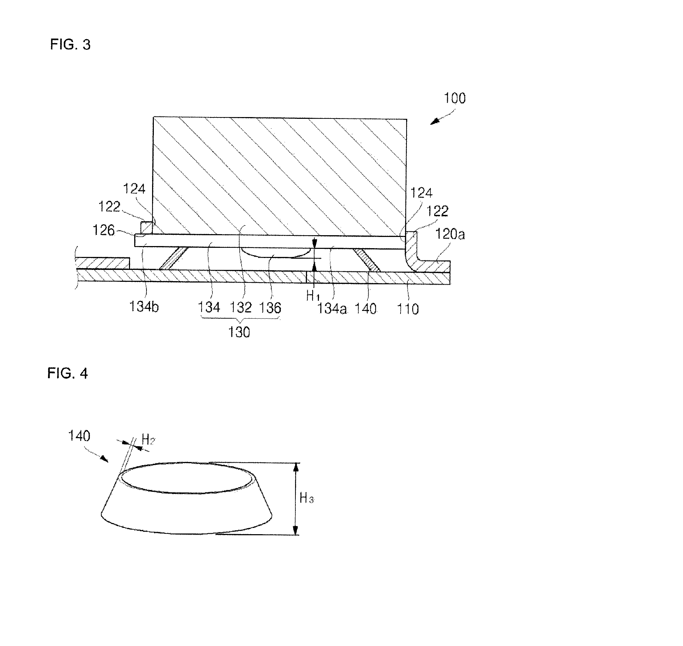

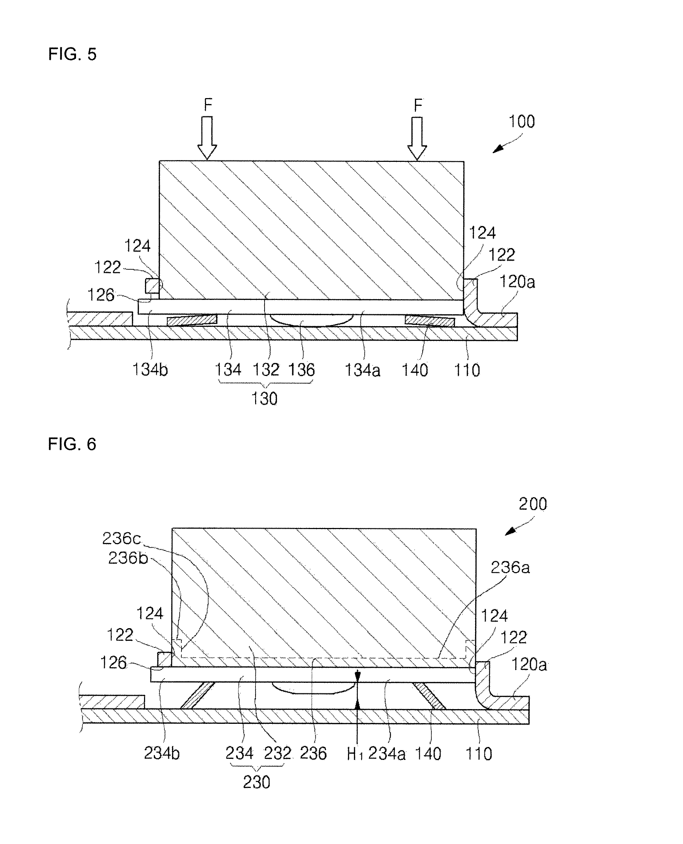

FIG. 1 is a plan view of a friction pad for use in a brake system according to an embodiment of the present invention. FIG. 2 is a vertical cross-section taken along line A-A' of FIG. 1 and FIG. 3 is an enlarged cross-section of a portion 'B' shown in FIG. 2. FIG. 4 is a perspective view showing a state of the friction pad after and before support springs are compressed and FIG. 5 is a diagram illustrating the operation of the portion 'B' shown in FIG. 3.

Referring to FIGS. 1 through 4, a friction pad 100 for a brake system according to a first embodiment of the present invention includes a back plate 110, a plurality of support plates 120, a plurality of friction materials 130, support springs 140, and a dovetail 150.

The back plate 110 is shaped of a substantially planar plate having a predetermined thickness and is made of metal. More specifically, the back plate 110 may have a planar shape and a predetermined thickness according to the design specification required for a brake system. In addition, the back plate 110 may have an appropriate area according to the number of friction materials 130 to be fixedly placed on its top surface. Further, the back plate 110 may be formed of an appropriate metal selected according to the mechanical strength required, for example, a metal selected from the group consisting of alloy steel, special steel, stainless steel, and so on.

Each support plate 120 is formed to have a planar shape conformable to that of the back plate 110 and includes a planar portion 120a, a protrusion 122, and a plurality of support holes 126. The support plate 120 is engaged by welding, riveting, or other engagement methods to then be supported by the back plate 110, such that the top surface of the back plate 110 comes into contact with a bottom surface of the support plate 120. Here, the engagement methods are not limited to the listed methods and the support plate 120 may be engaged with the back plate 110 by various engagement methods.

The planar shape of the planar portion 120a defines the overall appearance of the support plate 120, and the planar portion 120a comes into contact with the back plate 110 to allow the support plate 120 to be engaged with the back plate 110

As many protrusions 122 as the friction materials 130 are distributed over the entire area of the support plate. In a preferred embodiment, the protrusions 122 are integrally formed with the support plate 120. Specifically, each of the protrusions 122 may be formed such that a portion of the support plate 120 protrudes upward a predetermined height using a pressing process. In an alternative embodiment, the protrusions 122 may be formed by, for example, welding, using a separate ring-shaped member. The protrusions 122 may be formed to have an appropriate height enough to support the friction material 130. In addition, each of the protrusions 122 may have a coupling hole 124 formed at the interior thereof, through which the friction material 130 is inserted. In this case, the coupling hole 124 has a diameter corresponding to an outer diameter of the friction material 130.

Each of the plurality of support holes 126 may be formed at a boundary between the planar portion 120a and each of the protrusions 122 of the support plate 120. A coupling portion 134b on a support member 134 is inserted into and connected to the support hole 126. The plurality of support holes 126 may be formed on the back plate 110 to be spaced at a predetermined angle about the center of the coupling hole 124 of the protrusion 122. The support plate 120 may include three (3) support holes 126 spaced at 120 degrees, but not limited thereto. That is to say, the support plate 120 may have two holes or four or more support holes.

Each of the friction materials 130 includes a friction member 132 formed of a frictional material and the support member 134 contacting a bottom of the friction member 132 and supporting the friction member 132. The friction material 130 is inserted into the coupling hole 124 and supported by the support plate 120. More specifically, the friction material 130 is securely supported when the friction member 132 is inserted into the coupling hole 124 from the lower portion of the support plate 120 and the support member 134 is engaged with the support hole 126.

The friction member 132 generates a frictional force when its surface is pressed against a brake disc in the course of a braking process. The friction member 132 may be formed of a material that can be selected appropriately according to the frictional performance and durability required for a transport vehicle equipped with a brake system, such as a rail vehicle or an aircraft.

The friction member 132 includes a base unit made of a metal and a friction modifier distributed over the base unit and including a nonferrous metal, such as ceramic or graphite. The base unit of the friction member 132 may be formed of an iron (Fe)-based material having Fe as a main component or a copper (Cu)-based material having Cu as a main component. If the base unit is formed of a Fe-based material, it may contain nickel (Ni), manganese (Mn), or molybdenum (Mo) in addition to Fe. If the base unit is formed of a Cu-based material, it may contain tin (Sn), nickel (Ni), Fe, or Mo in addition to Cu. Thus, the base unit may be a material selectively used considering various factors including friction characteristics, heat resistance, and durability required for a friction pad for a brake system, and it is not intended to limit the base unit by the above-mentioned metal components.

The friction modifier of the friction member 132 may include, but not limited to, a ceramic such as alumina or silicon dioxide, graphite, and so forth, and various other materials may be selectively used considering various factors including friction characteristics, heat resistance, and durability required for a friction pad for a brake system. The friction member 132 is not limited to the listed materials and may be formed of various friction materials, for example, cast iron, a carbon composite material, or the like.

The friction member 132 is shaped of a cylinder having a circular cross-section. The shape of the friction member 132 is not limited to the illustrated example, but the friction member 132 may have various other shapes including prisms such as triangular and rectangular prisms. The friction material 130 may have a predetermined height according to the specification of brake system and the replacement cycle of friction pad.

The support member 134 includes a support portion 134a formed in conformity with the cross-sectional shape of the friction member 132 and a coupling portion 134b extending horizontally from the support portion 134a at an angle corresponding to the angle at which the support hole 126 is formed. The support member 134 is bonded to the bottom of the friction member 132 to support the friction member 132 while the coupling portion 134b is inserted into the support hole 126 to be engaged therewith. In such a manner, the friction material 130 is supported between the support plate 120 and the back plate 110.

The friction member 132 may be bonded to the support portion 134a of the support member 134 during a sintering process the friction member 132. In this regard, in order to achieve better bonding between the friction member 132 and the support member 134, the support member 134 may include an alloy layer, for example, a copper alloy layer. More specifically, a pressure sintering process may be performed on the friction member 132 and the support member 134 sequentially stacked on each other by applying a predetermined heat and pressure thereto at the same time. That is, according to the pressure sintering process, sintering of the friction member 132 and bonding between the friction member 132 and the support member 134 can be simultaneously carried out.

The friction material 130 may further include a stopper 136 that is integrally formed with the support member 134, that is, at a predetermined region of the bottom surface of the support member 134. The stopper 136 may projects a predetermined height from a central region of the bottom surface of the support member 134 at an interior area defined by the support springs 140. The stopper 136 prevents the support springs 140 from degrading, which may occur when the support springs 140 completely contact the back plate 110 to be subjected to surface contact with the back plate 110 due to a compressive load applied from the support member 134 during the friction between the brake pad and the brake disc. That is, when the compressive load derived from the friction material 130 is applied to the support springs 140 so that the support springs 140 come closer to the back plate 110, a bottom surface of the stopper 136 other than the support springs 140 comes into contact with a top surface of the back plate 110, thereby suppressing elastic deformation of the support springs 140. In other words, since only portions corresponding to the top-end outer diameters of the support springs 140 are subjected to line contact with the bottom surface of the support member 134, heat generated from the friction material 130 cannot be easily transferred to the support springs140.

The stopper 136 is formed to have a height H₁ greater than a thickness H₂ of each of the support springs 140, which corresponds to a height of each of the support springs 140 when it is maximally compressed, and less than a height H₃ of each of the support springs 140 before it is compressed. That is to say, in an original state in which the support springs 140 are not compressed, the stopper 136 that is disposed at the interior area defined by the support springs 140 is spaced a distance apart from the back plate 110. When a compressive load derived from the friction material 130 is applied to the support springs 140, the stopper 136 comes into close contact with the back plate 110 before the support springs 140 are completely compressed against the back plate 110. A distance by which the support springs 140 can be compressed is determined according to the distance between the bottom surface of the stopper 136 and the top surface of the back plate 110.

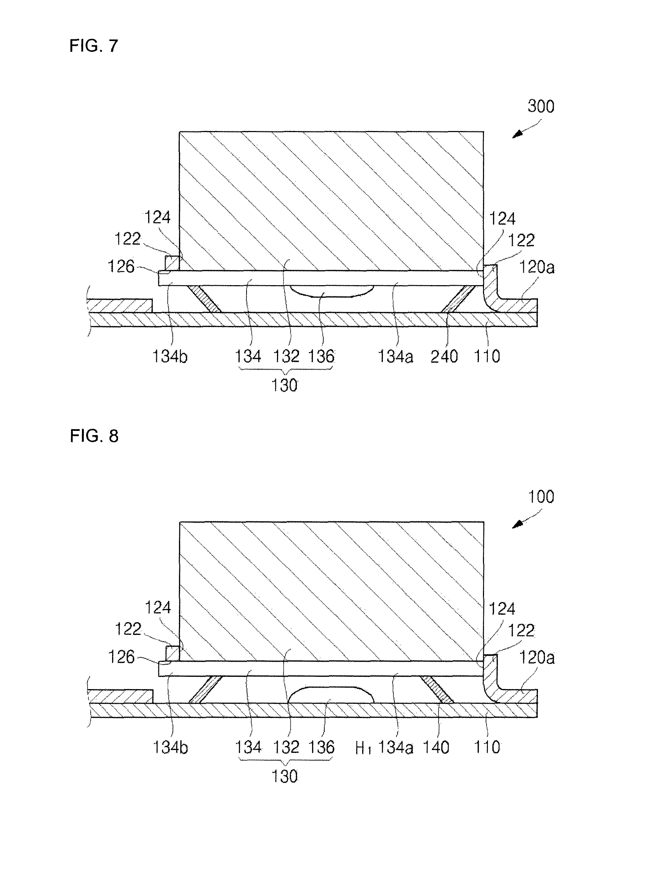

Further, while frictions are repeatedly produced between the brake pads and the brake disc, the support springs 140 may wear or abrade, so that they gradually become incapable of perform their original function, thereby disabling the friction materials 130 to uniformly contact the brake disc. In such a case, however, the stopper 136 may substitute for the support springs 140. That is, when different loads are applied from the friction member 132 by location over the entire surface in the course of a braking process, the stopper 136, in place of the support springs 140, may enable the friction members 132 to uniformly contact the brake disc without swiveling. More specifically, when the entire surface of the friction pad 100 is brought into contact with the brake disc, different loads may be applied to surfaces of the respective friction materials 130 of the friction pad 100, which are placed at various locations. In this case, the stopper 136 underlying the support member 134 and supporting the back plate 110 adjusts a surface angle of the friction member 132 according to the distribution of loads applied to the surface of each of the friction materials 130, thereby allowing the friction materials 130 to obtain uniform abrasion over the entire surface of the brake disc (not shown). As shown in FIG. 8, the stopper 136 may be integrally formed with the back plate 110. That is, the stopper 136 may be integrated with the back plate 110. Specifically, the stopper 136 may be formed at a predetermined portion of the central region of the top surface of the back plate 110 and may project a predetermined height at the interior area defined by the support springs 140.

The friction materials 130 are primarily molded with a given height and then inserted into the coupling hole 124 to then be subjected to sintering. Thus, when the friction materials 130 are finally formed, it has a reduced height a predetermined length less than the given height when it is primarily molded. The difference between the reduced height and the given height may vary depending on the composition of each of the friction materials 130 and molding and sintering conditions for the friction materials 130.

Each of the support springs 140 has open top and bottom surfaces, providing for a cavity at its interior side, and is formed as a leaf spring shaped of a truncated cone having substantially the same thickness along the length. Here, the truncated cone means a shape of one of two three-dimensional figure parts produced by cutting a cone by a plane parallel to its base, the one left when a cone or pyramid is cut by a plane parallel to the base and the apical part is removed. The support springs 140 are preferably made of spring steel so as to have elasticity. The shape of the support spring 140 is not limited to the truncated cone, and the support spring 140 may also be formed as coil springs.

The support springs 140 may be located inside the coupling hole 124 of the support plate 120, specifically between the support member 134 of the friction material 130 and the back plate 110. Thus, each of the support springs 140 is configured such that its bottom-end outer diameter is less than an inner diameter of the coupling hole 124 of the support plate 120. In addition, the support spring 140 is configured such that its bottom-end outer diameter is greater than 80 percent of an outer diameter of the support member 134. If the bottom-end outer diameter of the support spring 140 is less than 80 percent of the outer diameter of the support member 134, the support spring 140 cannot uniformly support the friction material 130 throughout the entire surface of the support member 134. Further, the support spring 140 is configured such that its top-end outer diameter is less than its bottom-end outer diameter. In addition, the support spring 140 is configured such that its top-end outer diameter is greater than 50 percent of the outer diameter of the support member 134. If the top-end outer diameter of the support spring 140 has an outer diameter less than 50 percent of the outer diameter of the support member 134, the support spring 140 cannot uniformly support the friction materials 130 throughout the entire surface of the support member 134. Lateral surfaces of the support spring 140 between the top- and bottom-end outer diameters thereof are inclined at an angle between 5°and 45°. If the inclination angle of the support spring 140 is less than 5°, the support spring 140 changes in its height within a narrow range so that a distance by which the friction member 132 can move locally in the vertical direction is restricted. Thus, the surface angle of the friction member 132 can only be adjusted to a restricted degree. On the contrary, if the inclination angle of the support spring 140 is greater than 45°, the support spring 140 may not effectively adjust the surface angle of the friction member 132 while absorbing the loads locally applied to the friction material 130. In an exemplary embodiment, the support spring 140 may be configured such that its bottom-end outer diameter is equal to 95 percent of the diameter of the support member 134, its top-end outer diameter is equal to 60 percent of the support member 134, and the lateral surfaces are inclined at an angle of 10°.

In addition, the support spring 140 may be formed to have a height corresponding to a tolerance between the support member 134 of the friction material 130 and the back plate 110. The distance between the support member 134 and the back plate 110 may be determined depending on the overall design specification of the brake system. That is, the height of the brake system may be determined by the thickness of the back plate 110 and the heights of the support spring 140 and the friction material 130. The thickness of the back plate 110 affects the overall strength of the brake system while the height of the friction material 130 affect the replacement cycle of the friction pad 100. Accordingly, the support spring 140 may be formed to have a height obtained by subtracting the thickness of the back plate 110 and the height of the friction material 130 from the overall height of the friction pad 100.

During the braking process performed by the brake system, the support spring 140 supports the friction material 130 so that the friction material 130 may have elasticity with respect to the loads applied to the brake disc and the friction material 130. Accordingly, if different loads are applied by location across the entire surface of the friction material 130 in the course of the braking process, the surface angle of the friction member 132 is adjusted such that the friction member 132 is parallel with the entire surface of the brake disc. More specifically, when the entire surface of the friction pad 100 is brought into contact with the brake disc, different loads may be applied to the surfaces of the respective friction materials 130 disposed at different locations of the friction pad 100. In such a case, the support spring 140 underlying the friction material 130 is elastically deformed according to the load applied to the surface of the friction material 130, thereby adjusting the surface angle of the friction member 132 to allow the friction material 130 to entirely contact the brake disc. Accordingly, as the friction material 130 contacts over the entire surface of the brake disc, the friction pad 100 generates a uniform frictional force, thereby preventing locally concentrated friction and wear of the brake disc.

The dovetail 150 is disposed on a bottom surface of the back plate 110, which is opposite to a surface to which the friction material 130 is connected. The shape of the dovetail 150 may vary depending on the specification of the brake system employing the friction pad 100 and is not limited to the illustrated example. The dovetail 150 may be connected to the back plate 110 by welding, for example, fusion welding or spot welding, riveting, brazing, and so forth. Particularly, the dovetail 150 may be connected to the back plate 110 by spot welding.

FIG. 6 is a cross-sectional view of a friction pad 200 for a brake system according to a second embodiment of the present invention.

Referring to FIG. 6, together with FIG. 1, the friction pad 200 includes a back plate 110, a support plate 120, a friction member 230, a support spring 140, and a dovetail 150. The same elements as those of the friction pad 100 are denoted by the same reference numerals and a detailed explanation thereof will not be given. The present invention will now be described in detail with emphasis imposed on only different parts between the friction pads 100 and 200 according to the first and second embodiments of the present invention.

The friction member 230 includes a friction member 232 formed of a friction material and a support member 234 contacting a bottom of the friction member 232 and supporting the friction member 232. In this case, since the friction member 232 formed by a pressure sintering process has low strength and hardness, cracks may be generated at a bonded surface when a force is applied in a direction perpendicular to an axial direction of the bonded surface in the course of the braking process.

To avoid this, instead of attaching the friction member 232 directly to the support member 234, a reinforcing member 236 may be bonded to the support member 234 before the friction member 232 is sintered. The reinforcing member 236 includes a protruding portion 236b projecting from a plate including a horizontal planar portion 236a, and a coupling hole 236c formed within the protruding portion 236b.

The reinforcing member 236 may be formed of a material with higher strength and hardness than the friction member 232. A bottom surface of the horizontal planar portion 236a is brazed to the support member 234, followed by a pressure sintering process. In the pressure sintering process, the friction member 232 is connected to the coupling hole 236c of the reinforcing member 236. Alternatively, pressure sintering is performed to fix the friction member 232 into the reinforcing member 236, followed by bonding of the reinforcing member 236 to the support member 234. The friction member 232 may be connected to the reinforcing member 236 by pressure sintering, brazing, and so forth.

FIG. 7 is a cross-sectional view of a friction pad 300 for a brake system according to a third embodiment of the present invention.

Referring to FIG. 7, the friction pad 300 includes a back plate 110, a back plate 110, a support plate 120, a friction material 130, a support spring 240, and a dovetail 150. The same elements as those of the friction pad 100 are denoted by the same reference numerals and a detailed explanation thereof will not be given. The present invention will now be described in detail with emphasis imposed on only different parts between the friction pads 100 and 300 according to the first and third embodiments of the present invention.

The support spring 240 has open top and bottom surfaces, providing for a cavity at its interior side, and is formed as a leaf spring shaped of a truncated cone having substantially the same thickness along the length. The support spring 240 is located inside the coupling hole 124 of the support plate 120 and between the support member 134 of the friction material 130 and the back plate 110. Alternatively, the support spring 240 is configured such that its top-end outer diameter is greater than its bottom-end outer diameter. In addition, the support spring 240 is configured such that its top-end outer diameter is smaller than an outer diameter of the support member 134. Further, the support spring 240 is formed to have a height corresponding to a tolerance between the support member 134 of the friction material 130 and the back plate 110. Accordingly, when the support spring 240 is maximally compressed, it is maintained at a state in which it is in close contact with the support member 134.

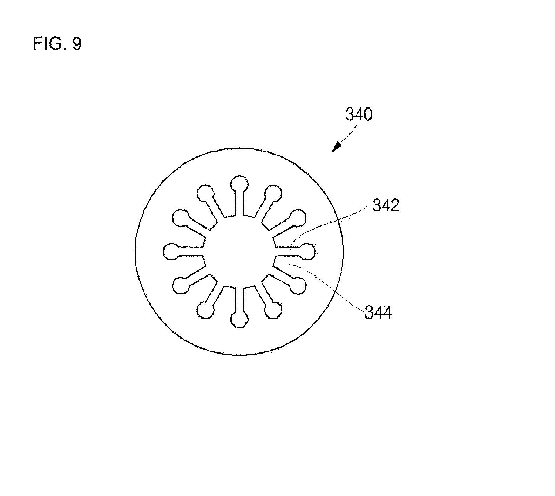

Another exemplary support spring 340 that will be used in the friction pads 100, 200 and 300 according to the first to third embodiments of the present invention will be described with reference to FIG. 9. The support spring 340 has substantially the same structure as the support springs 140 and 240 in that it has open top and bottom surfaces, providing for a cavity at its interior side, and is formed as a leaf spring shaped of a truncated cone having substantially the same thickness along the length. However, the support spring 340 according to the third embodiment is different from the support springs 140 and 240 according to the first and second embodiments in that it may include a plurality of recessed grooves 342, which are provided for the purpose of improving the modulus of elasticity. The plurality of recessed grooves 342 are equally spaced along the outer circumference of the cavity and extend a predetermined length in a radial direction from the cavity. The support spring 340 further includes support protrusions 344 that are disposed in the vicinity of the recessed grooves 342 and elastically support the support member 134 contacting the top surface of the support spring 340, thereby increasing the modulus of elasticity of the support spring 340.

Each of the recessed grooves 342 has a round bottom surface. If the recessed groove 342 has a notch-shaped bottom surface, the bottom surface of the recessed groove 342 of the support spring 340 may undergo stress concentration due to repeated elastic deformation of the support spring 340 when the friction material 130 operates with a compressive load from the brake pad, thereby creating cracks, by which the life of the support spring 340 may be undesirably shortened. When the recessed groove 342 has a round bottom surface, as shown in FIG. 9, the stress that is concentrated on the bottom surface of the recessed groove 342 is dispersed to then reduce the stress exerted on a specific location. Thus, the life of the support spring 340 and the brake system equipped with the support spring 340 can be increased.

Although exemplary embodiments of the present invention have been described in detail hereinabove, it should be understood that many variations and modifications of the basic inventive concept herein described, which may appear to those skilled in the art, will still fall within the spirit and scope of the exemplary embodiments of the present invention as defined by the appended claims.

## Claims

1. A friction pad for a brake system, the friction pad comprising:
a plurality of friction materials, each including a friction member shaped of a column with a predetermined height and a support member bonded to a bottom surface of the friction member;
a support plate shaped of a plate, supporting the friction material and including a planar portion, a protrusion protruding upward from the planar portion and having a coupling hole formed at the interior thereof, the coupling hole through which the friction material is inserted and having a diameter corresponding to an outer diameter of the friction material;
a back plate having a planar shape mating to the support plate and connected to a bottom surface of the support plate;
a support spring interposed between a bottom surface of the friction material and a top surface of the back plate and supporting the friction material;
a dovetail bonded to a bottom surface of the back plate and fixing the friction pad to the brake system; and
a stopper projecting a distance from a central region of at least one of the support member and the back plate.

2. The friction pad of claim 1 wherein the stopper has a height greater than a thickness of the support spring and less than an original height of the support spring before it is compressed.

3. The friction pad of claim 1, wherein the support spring is a leaf spring shaped of a truncated cone or a coil spring.

4. The friction pad of claim 1, wherein the support spring includes at least one of a truncated cone shaped spring having a top-end outer diameter smaller than a bottom-end outer diameter and a truncated cone shaped spring having a top-end outer diameter greater than a bottom-end outer diameter.

5. The friction pad of claim 4, wherein when the support spring is a truncated cone shaped spring having a top-end outer diameter greater than a bottom-end outer diameter, the top-end outer diameter of the support spring is smaller than an outer diameter of the support member and has a diameter corresponding to a tolerance between the support member and the back plate.

6. The friction pad of claim 1, further comprising a reinforcing member that is disposed at a boundary between the friction materials and the support member.

7. The friction pad of claim 6, wherein the reinforcing member includes a protruding portion projecting from a plate including a horizontal planar portion and a coupling hole formed in the protruding portion.

8. The friction pad of claim 1, wherein the support spring includes a plurality of recessed grooves and a plurality of support protrusions, the plurality of recessed grooves each extending a predetermined length from a cavity formed on the top surface of the support spring and equally spaced along the outer circumference of the cavity, and the plurality of support protrusions disposed in the vicinity of the plurality of recessed grooves and elastically supporting the support member.

9. The friction pad of claim 1, wherein each of the plurality of recessed grooves has a round bottom surface.
